# EUROPEAN PATENT APPLICATION

(11) **EP 2 882 246 A1**
(43) Date of publication of application: **10.06.2015**
(21) Application number: 13825833.0
(22) Date of filing: 26.07.2013
(51) Int. Cl.: H04W 72/04

(54) **WIRELESS COMMUNICATION METHOD, WIRELESS BASE STATION, USER EQUIPMENT AND WIRELESS COMMUNICATION SYSTEM**

(30) Priority: 01.08.2012 JP 2012171407
(71) Applicant: NTT DOCOMO, INC., Chiyoda-ku Tokyo 100-6150 (JP)
(72) Inventor: TAKEDA, Kazuaki, Tokyo 100-6150 (JP); MU, Qin, Beijing 100190 (CN); LIU, Liu, Beijing 100190 (CN); CHEN, Lan, Beijing 100190 (CN)
(74) Representative: Hoffmann Eitle
(86) International application number: PCT/JP2013/070303
(87) International publication number: WO 2014/021211

(57) **Abstract**

In order to make full use of available radio resources when transmitting downlink control information in a radio resource region for downlink shared data channel, the present invention provides a radio communication method in which a radio base station configures a plurality of resource sets for a user terminal, each of the resource sets including a plurality of resource blocks allocated to an enhanced downlink control channel and notifies the user terminal of enhanced downlink control channel allocation information. The user terminal detects resource blocks allocated to the downlink shared data channel for the user terminal, based on the enhanced downlink control channel allocation information. The enhanced downlink control channel allocation information indicates resource blocks that constitutes each of the resource sets and a resource block that constitutes an other resource set in a same resource block group as the resource blocks of the resource sets.

## Description

### TECHNICAL FIELD

The present invention relates to a radio communication method, a radio base station, a user terminal and a radio communication system in a next-generation mobile communication system.

### BACKGROUND ART

In a UMTS (Universal Mobile Telecommunications System) network, for the purposes of further increasing data rates and providing low delay and so on, long-term evolution (LTE) has been under study (see Non-Patent Literature 1). In LTE, as multi access schemes, OFDMA (Orthogonal Frequency Division Multiple Access) is adopted for the downlink and SC-FDMA (Single Carrier Frequency Division Multiple Access) is adopted for the uplink.

In addition, for the purposes of achieving further broadbandization and higher speeds, a successor system to LTE has been under study (which may be called, for example, LTE Advanced or LTE Enhancement (hereinafter referred to as "LTE-A")). In LTE (Rel. 8) and LTE-A (Rel. 9 and later), MIMO (Multi Input Multi Output) technique has been also considered as a radio communication technique for transmitting and receiving data via a plurality of antennas thereby to improve a spectrum efficiency. In this MIMO technique, a transmission/reception device is equipped with a plurality of transmission/reception antennas, and different transmission information sequences are transmitted simultaneously from the different transmission antennas.

### CITATION LIST

### NON-PATENT LITERATURE

Non-Patent Literature 1:3GPP TR 25.913 "Requirements for Evolved UTRA and Evolved UTRAN"

### SUMMARY OF THE INVENTION

### TECHNICAL PROBLEM

In the LTE-A system or any future systems, study has been made about multiple user MIMO (MU-MIMO) transmission in which transmission information sequences are simultaneously transmitted from different transmission antennas to different users. This MU-MIMO transmission is applied to Hetnet (Heterogeneous network) and CoMP (Coordinated Multi-Point) transmission. On the other hand, in these future systems, there may be a problem that due to shortage in capacity of downlink control channel to transmit downlink control information, it is difficult to make full use of the system performance of MU-MIMO transmission and the like

In view of this, consideration is given to extending a radio resource region for downlink control channel to transmit more downlink control information. For example, it can be considered that downlink control information is transmitted in the radio resource region for downlink shared data channel. However, there may arise a problem that it is difficult to make full use of available radio resources when transmitting downlink control information in the radio resource region for downlink shared data channel.

The present invention has been made in view of the foregoing and aims to provide a radio communication method, a radio base station, a user terminal and a radio communication system that are capable of making full use of available radio resources when transmitting downlink control information in a radio resource region for downlink shared data channel.

### SOLUTION TO PROBLEM

The present invention provides a radio communication method in a radio communication system in which a radio base station transmits downlink control information using an enhanced downlink control channel frequency-division-multiplexed with a downlink shared data channel, the radio communication method comprising the steps of: configuring, by the radio base station, a plurality of resource sets for a user terminal, each of the resource sets including a plurality of resource blocks allocated to the enhanced downlink control channel; notifying, by the radio base station, the user terminal of enhanced downlink control channel allocation information indicating the resource blocks that constitute each of the resource sets; and detecting, by the user terminal, resource blocks allocated to the downlink shared data channel for the user terminal, based on the enhanced downlink control channel allocation information, wherein the enhanced downlink control channel allocation information indicates a resource block that constitutes an other resource set in a same resource block group as any of the resource blocks that constitute each of the resource sets.

### TECHNICAL ADVANTAGE OF THE INVENTION

According to the present invention, it is possible to make full use of available radio resources when transmitting downlink control information in a radio resource region for downlink shared data channel.

### BRIEF DESCRIPTION OF THE DRAWINGS

Fig. 1 is a schematic diagram of a radio communication system to which MU-MIMO is applied;
Fig. 2 is a diagram illustrating an example of a subframe for downlink MU-MIMO transmission;
Fig. 3 provides diagrams each for explaining a subframe structure for enhanced PDCCH;
Fig. 4 provides diagrams each for explaining a method for mapping to the enhanced PDCCH;
Fig. 5 provides diagrams each illustrating an example of distributed mapping to the enhanced PDCCH;
Fig. 6 provides diagrams illustrating an example of an enhanced PDCCH sets;
Fig. 7 provides diagrams illustrating another example of the enhanced PDCCH sets;
Fig. 8 is a diagram illustrating an example of notification of the structure of the enhanced PDCCH sets using bitmaps;
Fig. 9 is a diagram illustrating an example of notification of PDSCH allocation using DCI;
Fig. 10 is a diagram illustrating an example of detection of PDSCH allocation;
Fig. 11 is a diagram illustrating enhanced PDCCH allocation information according to a present embodiment;
Fig. 12 is a diagram illustrating an example of detection of PDSCH according to the present embodiment;
Fig. 13 is a diagram illustrating another example of detection of PDSCH according to the present embodiment;
Fig. 14 is a diagram for explaining the system configuration of a radio communication system according to the present embodiment;
Fig. 15 is a diagram for explaining an overall configuration of a radio base station according to the present embodiment;
Fig. 16 is a diagram for explaining an overall configuration of a user terminal according to the present embodiment;
Fig. 17 is a diagram illustrating the functional structure of a baseband signal processing section of the radio base station according to the present embodiment and a part of higher layers; and
Fig. 18 is a diagram illustrating the functional structure of a baseband signal processing section of the user terminal according to the present embodiment.

### DESCRIPTION OF EMBODIMENTS

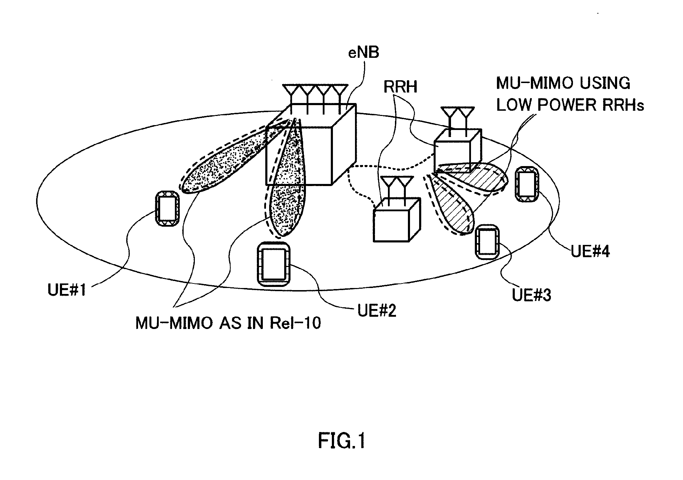

Fig. 1 is a diagram illustrating an example of a radio communication system to which MU-MIMO transmission is applied. In the system illustrated in Fig. 1, a small-sized base station (e.g., RRH Remote Radio Head) having a local coverage area is provided in a coverage area of a radio base station (e.g. , eNodeB), and the system is configured hierarchically. In this system, downlink MU-MIMO transmission is performed such that data is transmitted from a plurality of antennas of a radio base station to a plurality of user terminals UE #1 and UE #2 (UE: User Equipment) simultaneously. In addition, data is transmitted from a plurality of antennas of a plurality of small-sized base stations to a plurality of user terminals UE #3 and UE #4 simultaneously.

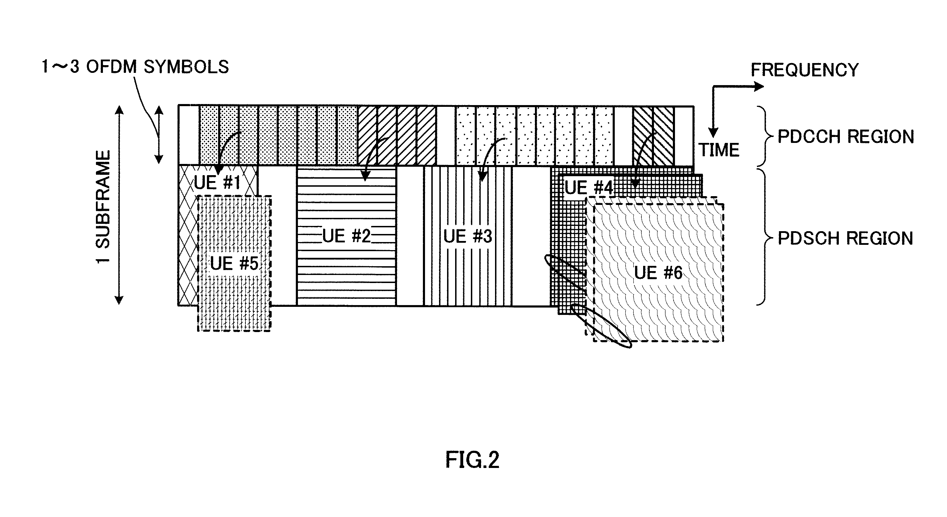

Fig. 2 is a diagram illustrating an example of a radio frame (e.g., one subframe) to which downlink MU-MIMO transmission is applied. As illustrated in Fig. 2, in the system under application of MU-MIMO transmission, first to a predetermined-number OFDM symbols (3 OFDM symbols at the maximum) in each subframe are reserved as a radio resource region for downlink control channel (PDCCH: Physical Downlink Control Channel) (PDCCH region). Besides, radio resources following the first to predetermined-number symbols are reserved as a radio resource region for downlink shared data channel (PDSCH: Physical Downlink Shared Channel) (PDSCH region).

The PDCCH region is allocated with downlink control information (DCI) for user terminals UE (here, UE #1 to UE #4). DCI includes assignment information of data to the user terminals UE in the PDSCH region and the like. For example, in Fig. 2, the user terminal UE #2 receives data for the user terminal UE #2 allocated to the PDSCH region, based on DCI for the user terminal UE #2 allocated to the PDCCH region.

Further, in MU-MIMO transmission, data transmission for a plurality of user terminals is allowed at the same time and in the same frequency. Therefore, in the PDSCH region of Fig. 2, data for the user terminal UE #1 and the data for the user terminal UE #5 may be multiplexed to the same frequency region. Likewise, data for the user terminal UE #4 and data for the user terminal UE #6 may be multiplexed to the same frequency region.

However, as illustrated in Fig. 2, if data for the user terminals UE #1 to UE #6 is attempted to be allocated to the PDSCH region, it may be difficult to allocate DCI for all the user terminals UE #1 to UE #6 to the PDCCH region. For example, in the PDCCH region of Fig. 2, DCI for the user terminals UE #5 and UE #6 cannot be allocated. In this case, due to insufficiency of the PDCCH region to allocate DCI, the number of user terminals UE to multiplex to the PDSCH region is restricted, and therefore, it may be difficult to enjoy the improvement in the efficiency of use of radio resources by MU-MIMO transmission.

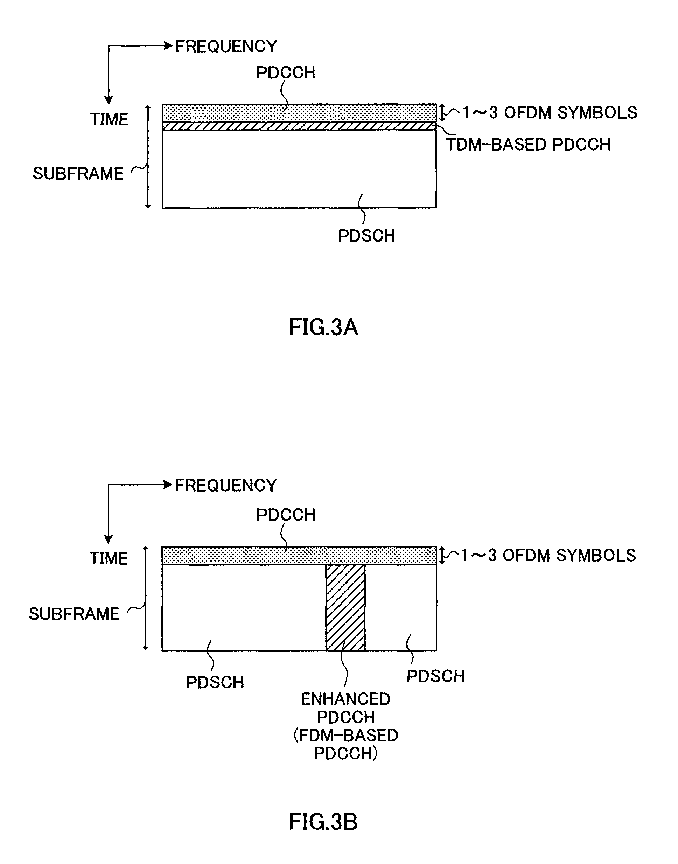

In order to solve this problem of shortage of the PDCCH region, it may be configured that the PDCCH allocation region is extended to a region other than the control region of the first to third OFDM symbols in the subframe (the PDCCH region is extended to the existing PDSCH region of fourth and later OFDM symbols). As a method to extend the PDCCH region, there is a method of time - division-multiplexing PDSCH and PDCCH in the existing PDSCH region (TDM approach) as illustrated in Fig. 3A and a method of frequency-division-multiplexing PDSCH and PDCCH in the existing PDSCH region (FDM approach) as illustrated in Fig. 3B.

In the TDM approach as illustrated in Fig. 3A, the PDCCH is arranged over the system band in some OFDM symbols out of fourth and later OFDM symbols in the subframe. On the other hand, in the FDM approach as illustrated in Fig. 3B, the PDCCH is arranged in a part of the system band over all the fourth and later OFDM symbols in the subframe. The PDCCH frequency-division-multiplexed with the PDSCH in this FDM approach can be demodulated using a demodulation reference signal which is a user-specific reference signal (DM-RS: DeModulation-Reference Signal). Therefore, DCI transmitted by this PDCCH is able to enjoy a beamforming gain like downlink data transmitted in the PDSCH and is also effective at increasing the capacity of the PDCCH. This FDM approach is regarded as becoming important in future.

In the following description, a PDCCH frequency-division-multiplexed with a PDSCH in the FDM approach is called enhanced PDCCH. This enhanced PDCCH may be also called enhanced physical downlink control channel, ePDCCH, E-PDCCH, FDM-based PDCCH, UE-PDCCH or the like.

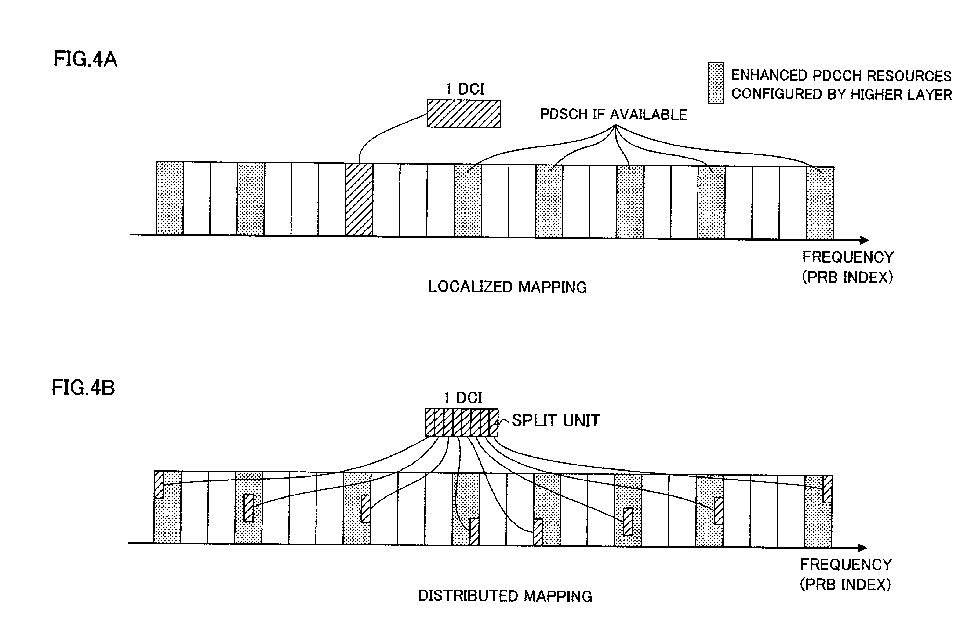

As for the enhanced PDCCH in the FDM approach stated above, localized mapping and distributed mapping have been considered as the DCI mapping method. Fig. 4 provides diagrams each illustrating an example of DCI mapping method in the enhanced PDCCH. Fig. 4A illustrates an example of localized mapping and Fig. 4B illustrates an example of distributed mapping.

As illustrated in 4A and 4B, resources for the enhanced PDCCH are made up of a predetermined number of resource block pairs (PRB (Physical Resource Block) pairs, hereinafter referred to as "PRB pairs") distributed over the system band. Each PRB pair is made up of two consecutive PRBs in the time direction and is identified by a PRB index assigned in the frequency direction. The plural PRB pairs that make up the enhanced PDCCH are determined by higher layers. The PRB index to identify each of the plural PRB pairs is signaled to the user terminal UE by higher layer signaling or the like. Otherwise, the plural PRB pairs that make up the enhanced PDCCH are determined in advance in the specifications.

As illustrated in Fig. 4A, in the localized mapping, one DCI is locally mapped to a specific PRB pair that constitutes the enhanced PDCCH. Specifically, one DCI is mapped to one PRB pair (for example, PRB pair of best channel quality) based on CQI fed back from the user terminal UE. In the localized mapping, use of CQI makes it possible to achieve a frequency scheduling gain. Note that in Fig. 4A, among a plurality of PRB pairs that make up the enhanced PDCCH, a PRB pair with no DCI mapping may be mapped with PDSCH.

As illustrated in Fig. 4B, in the distributed mapping, one DCI is mapped in a distributed manner to a plurality of PRB pairs that make up the enhanced PDCCH. Specifically, one DCI is divided into a plurality of split units, which are mapped in a distributed manner to the above-mentioned PRB pairs (may be mapped to all the PRB pairs). In the distributed mapping, as one DCI is distributed over the systemband, it is possible to achieve a frequency diversity gain.

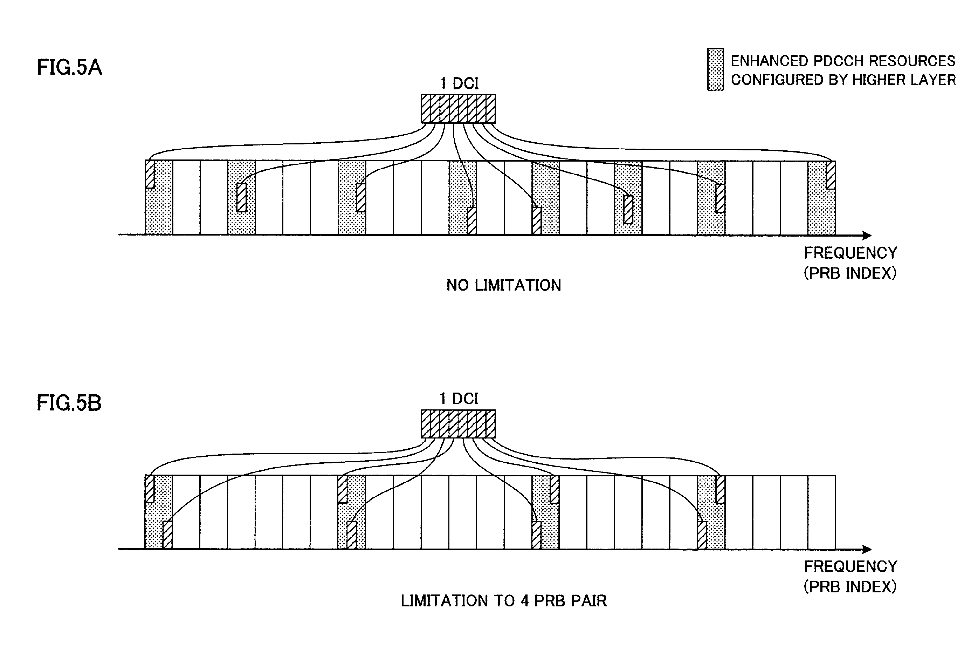

As described above, unlike localized mapping, the distributed mapping is such that each DCI is divided into a plurality of split units, which are mapped in a distributed manner to a plurality of PRB pairs that made up the enhanced PDCCH. Therefore, as illustrated in Fig. 5A, when the enhanced PDCCH is made up of a plurality of PRB pairs (eight PRB pairs in Fig. 5A), if one DCI is only mapped, the utilization efficiency of radio resources is reduced. This is because split units of one DCI are mapped in a distributed manner to many PRB pairs, thereby reducing PRB pairs available for PDSCH mapping.

Then, in the distributed mapping, as illustrated in Fig. 5B, it has been considered that a limitation is imposed to restrict the number of PRB pairs to which split units of one DCI are mapped in a distributed manner. In Fig. 5B, the number of PRB pairs which split units of one DCI are mapped in a distributed manner is limited to four. Therefore, in Fig. 5B, the number of PRB pairs available for PDSCH mapping is increased as compared with the case in Fig. 5A.

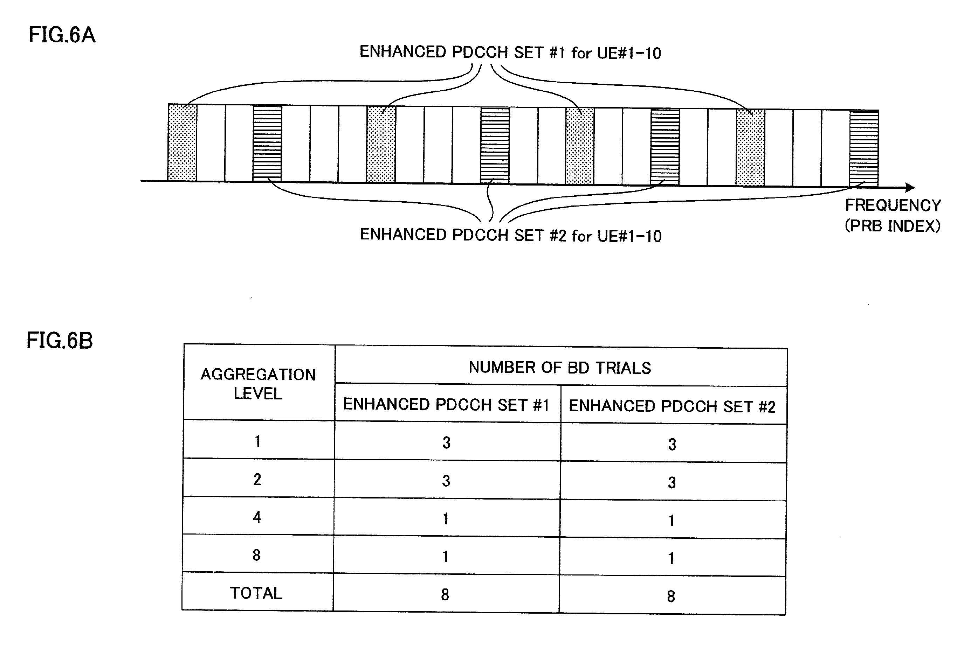

It has been also considered that in using enhanced PDCCH frequency-division-multiplexed with PDSCH (FDM approach), a plurality of enhanced PDCCH sets are configured for each user terminal UE. As illustrated in Fig. 6A, each enhanced PDCCH set is made up of a plurality of PRB pairs to be allocated to the enhanced PDCCH. Here, the enhanced PDCCH set may be called ePDCCH set, E-PDCCH set or simply set.

In Fig. 6A, each of user terminals UE #1 to UE #10 is configured with enhanced PDCCH sets #1 and #2 in an overlapping manner. In Fig. 6A, when the number of user terminals UE for which to transmit DCI is smaller than a predetermined number, DCI is mapped only to the one enhanced PDCCH set #1 and therefore, the other enhanced PDCCH set #2 can be used only for PDSCH. As a plurality of enhanced PDCCH sets are configured for the user terminals UE in an overlapping manner, it is possible to improve the utilization efficiency of radio resources. Here, in each enhanced PDCCH set, DCI may be subj ected to distributed mapping (see Figs. 4B and 5) or localized mapping (see Fig. 4A).

As illustrated in Fig. 6A, when the enhanced PDCCH sets #1 and #2 are configured for each user terminal UE, the user terminal UE needs to perform blind decoding on each of the enhanced PDCCH sets #1 and #2. In this case, as illustrated in Fig. 6B, the number of search space candidates per enhanced PDCCH set may be determined so as not to increase the number of search space candidates over the enhanced PDCCH sets #1 and #2 as a whole. With this setting, even when each user terminal UE performs blind decoding on a plurality of enhanced PDCCH sets, it is possible to prevent increase in the number of times of blind decoding.

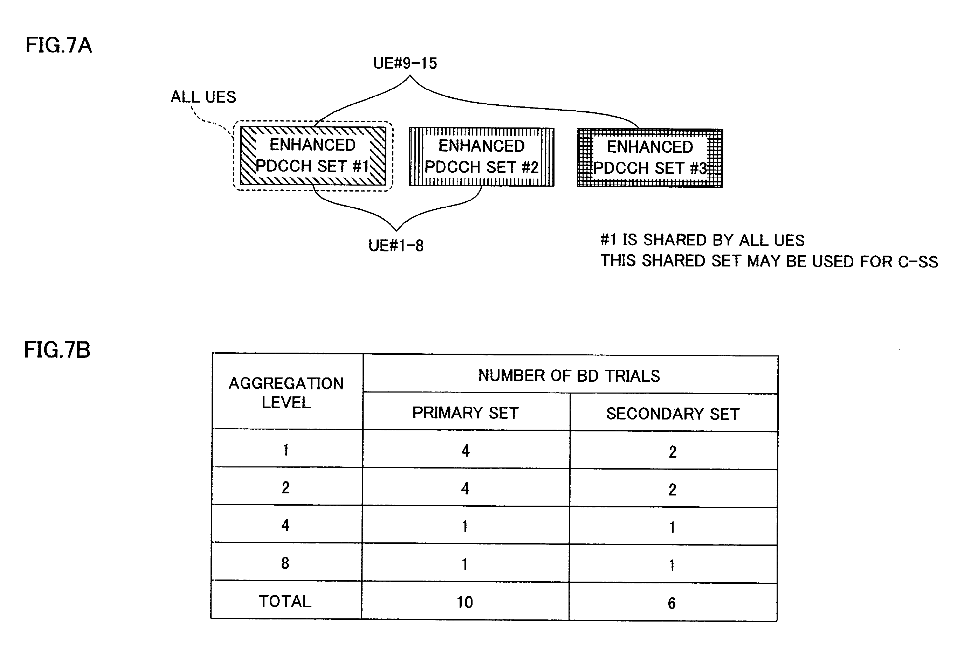

Besides, when a plurality of enhanced PDCCH sets are configured for each user terminal UE, as illustrated in Fig. 7A, the enhanced PDCCH sets for each user terminal UE may be configured as a primary set and a secondary set. This primary set is an enhanced PDCCH set configured to be shared by all user terminals and may be used as a common search space (CSS). On the other hand, the secondary set is an enhanced PDCCH set configured to be specific to at least one user terminal UE and may be used as a UE-specific search space (UE-specific SS).

Fig. 7A illustrates the enhanced PDCCH set #1 as a primary set and the enhanced PDCCH sets #2 and #3 as secondary sets for the user terminals UE #1 to UE #8 and user terminals UE #9 to UE #15, respectively. Inthiscase, as illustrated in Fig. 7B, the number of search space candidates for the primary set may be greater than the number of search space candidates for the secondary sets. With this setting, it is possible to reduce the probability of occurrence of blocking in the primary set which is subjected to blind decoding by all the user terminals UE.

As described above, when the plural enhanced PDCCH sets are configured for each user terminal UE, it has been considered that each user terminal UE is notified of the configuration of each of the plural enhanced PDCCH sets using a bitmap.

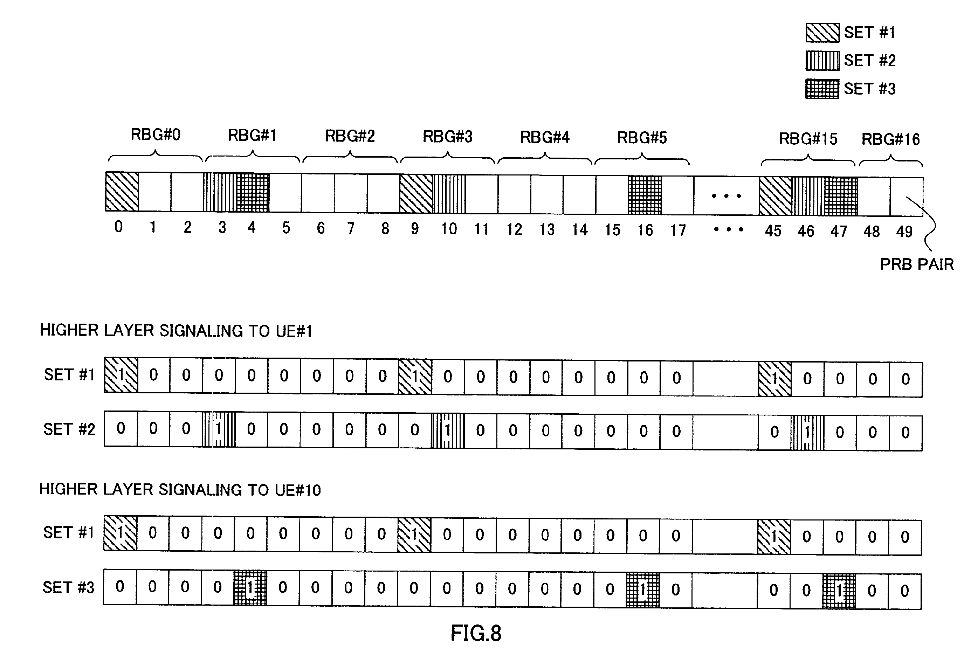

Fig. 8 is a diagram illustrating an example of notification of the configuration of the enhanced PDCCH sets using bitmaps. In Fig. 8, it is assumed that the bandwidth is 10 MHz (50 PRB pairs). In Fig. 8, it is also assumed that the enhanced PDCCH set #1 is made up of the PRB pairs #0, #9 and #45, the enhanced PDCCH set #2 is made up of the PRB pairs #3, #10 and #46, the enhanced PDCCH set #3 is made up of the PRB pairs #4, #16 and #47.

In Fig. 8, the bitmap sent to the user terminal UE is made up of bits that are equal in number to PRB pairs that constitute the bandwidth and is generated for each enhanced PDCCH set. Each bit in the bitmap indicates whether a corresponding PRB pair is allocated to the enhanced PDCCH set or not.

As illustrated in Fig. 8, in the bitmap for the enhanced PDCCH set #1, bits corresponding to the PRB pairs #0, #9 and #45 are assigned with "1" (allocated) and bits corresponding to the other PRB pairs are assigned with "0" (not allocated). Likewise, in the bitmap for the enhanced PDCCH set #2, bits corresponding to the PRB pairs #3, #10 and #46 are assigned with "1" (allocated), and in the bitmap for the enhanced PDCCH set #3, bits corresponding to the PRB pairs #4, #16 and #47 are assigned with "1" (allocated).

Further, in Fig. 8, the enhanced PDCCH sets #1 and #2 are configured for the user terminal UE #1 and the enhanced PDCCH sets #1 and #3 are configured for the user terminal UE #10. Therefore, the bitmaps for the enhanced PDCCH sets #1 and #2 are sent to the user terminal #1 by higher layer signaling. The bitmaps for the enhanced PDCCH sets #1 and #3 are sent to the user terminal #10 by higher layer signaling

By the way, in the LTE system (release 8) and the pre-release 10 LTE-A system, DCI (specifically, resource allocation field) is used to notify the user terminal UE of PDSCH allocation.

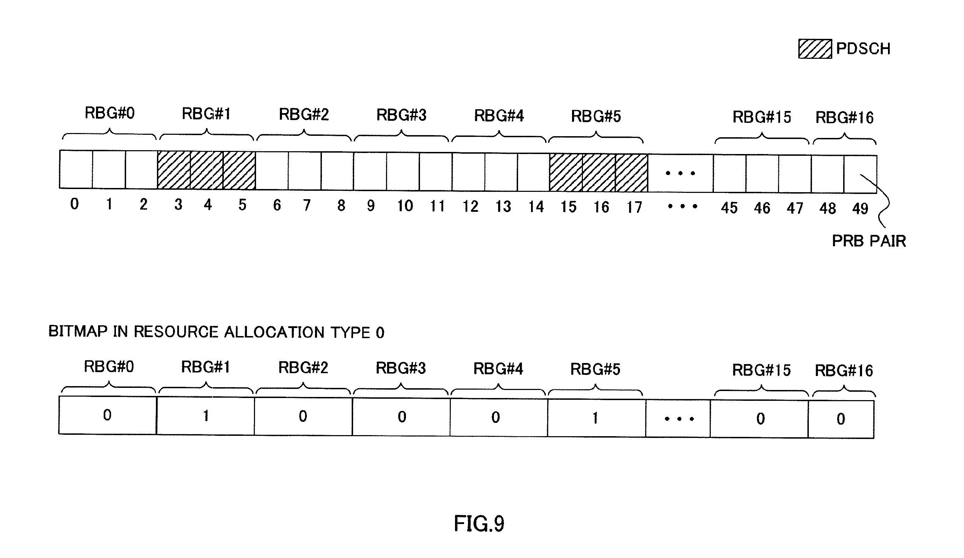

Fig. 9 is a diagram illustrating an example of notification of PDSCH allocation using DCI. As illustrated in Fig. 9, in the resource allocation type 0, a bitmap is generated which indicates resource block groups (RBG) allocated to PDSCH and is set in the DCI resource allocation field. Each resource block group (RBG) is made up of a predetermined number of PRB pairs consecutive in the frequency direction. As illustrated in Fig. 9, when the bandwidth is 10 MHz (50 PRB pairs), one RBG is made up of three PRB pairs.

As illustrated in Fig. 9, when the RBGs #1 and #5 are allocated to PDSCH for a specific user terminal UE, bits corresponding to the RBGs #1 and #5 are assigned with "1" (allocated) and bits corresponding to the other RBGs are assigned with "0" (not allocated). In this way, when the user terminal UE is notified of PDSCH allocation in RBG unit, it is possible to reduce the size of a bitmap as compared with the case of notification in PRB-pair unit.

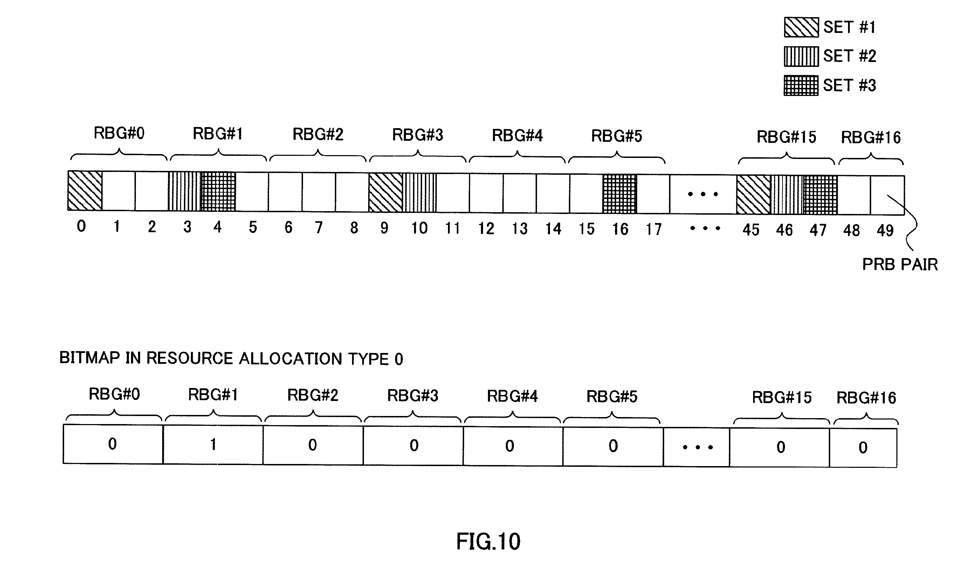

Here, description is made about PDSCH allocation when a plurality of enhanced PDCCH sets are configured for each user terminal UE. As illustrated in Fig. 10, when each of the enhanced PDCCH sets #1 to #3 is made up of a plurality of PRB pairs, the other PRB pairs (PRB pairs that do not constitute the enhanced PDCCH sets #1 to #3) may be allocated with PDSCH. And, when a plurality of enhanced PDCCH sets are configured for each user terminal UE, as explained in Fig. 6, all the enhanced PDCCH sets are not always used. Therefore, PDSCH may be allocated to PRB pairs that constitute unused enhanced PDCCH sets.

In this way, when a plurality of enhanced PDCCH sets are configured for each user terminal UE, it is desirable that PDSCH is flexibly allocated to available PRB pairs thereby to make effective use of radio resources. However, when a plurality of enhanced PDCCH sets are configured for each user terminal UE, as explained in Figs. 8 and 9, there may arise a problem that the user terminal UE cannot detect PRB pairs allocated with PDSCH for the user terminal appropriately, even if the user terminal UE is notified of allocation of PDSCH and enhanced PDCCH sets.

For example in Fig. 10, the user terminal #10 (see Fig. 8) configured with the enhanced PDCCH sets #1 and #3 is to detect PDSCH allocation to the RBG #1 based on the bitmap of the resource allocation type 0 in the DCI. The user terminal #10 detects allocation of the enhanced PDCCH set #3 to the PRB pair #4 in the RBG #1 based on the bitmaps for the enhanced PDCCH sets #1 and #3.

However, in Fig. 10, the user terminal #10 is not able to detect allocation of the enhanced PDCCH set #2 to the PRB pair #3 in the RBG #1. This is because the user terminal UE #10 is not notified of the bitmap for the enhanced PDCCH set #2. In such a case, even if PDSCH is allocated only to the PRB pair #5 in the RBG #1, the user terminal UE #10 may misdetect PDSCH allocation to both of the PRB pairs #3 and #5.

Then, the present inventors have found a radio communication method capable of allocating PDSCH to available PRB pairs flexibly by allowing a user terminal UE to detect PRB pairs allocated to PDSCH for the user terminal appropriately when a plurality of enhanced PDCCH sets is configured for the user terminal UE and completed the present invention.

According to the radio communication method of the present embodiment, a radio base station configures a user terminal UE with a plurality of enhanced PDCCH sets (resources sets). The radio base station notifies the user terminal UE of enhanced PDCCH allocation information (enhanced downlink control channel allocation information). The user terminal UE detects a resource block allocated to the PDSCH for the user terminal UE, based on the enhanced PDCCH allocation information. Besides, the resource block may be detected based on the enhanced PDCCH allocation information and PDSCH allocation information (downlink shared data channel allocation information) included in DCI (downlink control information).

Here, the enhanced PDCCH allocation information indicates resource blocks that constitute each enhanced PDCCH set configured for the user terminal UE. This enhanced PDCCH allocation information indicates a resource block that constitutes, in the same resource block group as the resource blocks, another resource set configured for another user terminal UE. The enhanced PDCCH allocation information is sent to the user terminal UE by higher layer signaling. In the following description, the enhanced PDCCH allocation information is assumed to be a bitmap, however, this is not intended to limit the invention. For example, the enhanced PDCCH allocation information may be index numbers of resource blocks that constitute each enhanced PDCCH set.

Further, the PDSCH allocation information is information indicating allocation of PDSCH for the user terminal UE, and is included in DCI (specifically, resource allocation field). The PDSCH allocation information varies depending on the resource allocation type (for example, 0, 1, 2). The PDSCH allocation information of the resource allocation type 0 is a bitmap indicating PDSCH allocation in unis of resource block group. In the following description, it is assumed that the PDSCH allocation information is of the resource allocation type 0, but this is not intended to limit the invention. The DCI including the PDSCH allocation information may be transmitted using either of PDCCH and enhanced PDCCH.

Here, a resource block is a frequency resource unit that makes up an enhanced PDCCH set, for example, a PRB pair and PRB. In the following description, it is assumed that the resource block is a PRB pair, but this is not intended to limit the present invention. The resource block group is made up of a plurality of resource blocks consecutive in the frequency direction. In the following description, it is assumed that a resource block group is made up of a predetermined number of PRB pairs consecutive in the frequency direction, but it may be made up of a plurality of PRBs consecutive in the frequency direction.

The next description is made about a radio communication method according to the present embodiment.

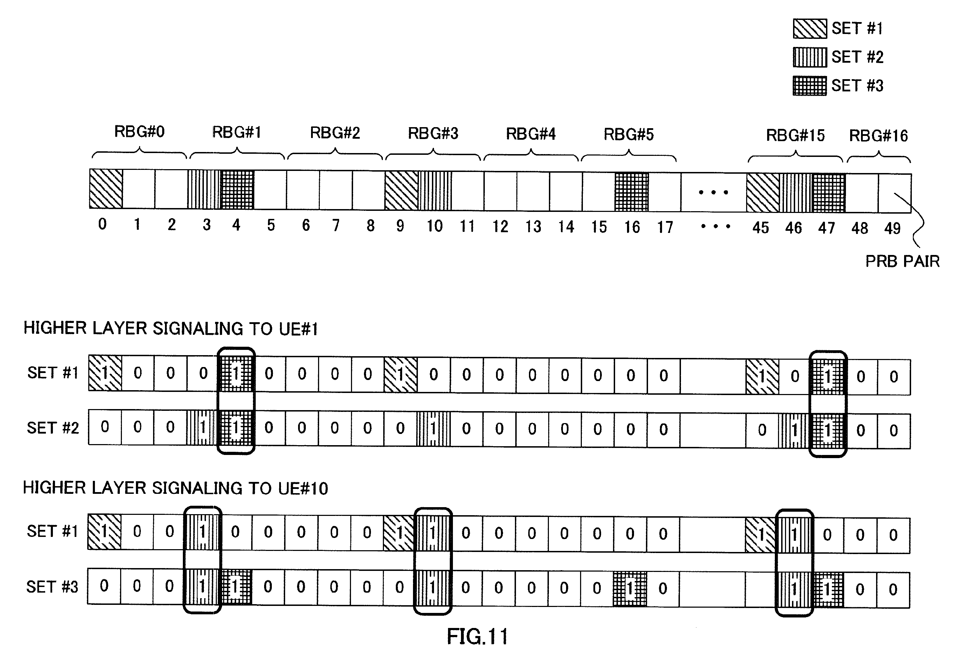

Fig. 11 is a diagram illustrating an example of enhanced PDCCH allocation information according to the present embodiment. In Fig. 11, it is assumed that the bandwidth is 10 MHz (50 PRB pairs). In Fig. 11, it is also assumed that the enhanced PDCCH set #1 is made up of the PRB pairs #0, #9 and #45, the enhanced PDCCH set #2 is made up of the PRB pairs #3, #10 and #46, and the enhanced PDCCH set #3 is made up of the PRB pairs #4, #16 and #47.

In Fig. 11, the enhanced PDCCH allocation information includes bitmaps corresponding to the respective enhanced PDCCH sets configured for the user terminal UE. Each of the bitmaps is made up of bits that are equal in number to PRB pairs that constitute the bandwidth. Each bit indicates whether its corresponding PRB pair is allocated with the enhanced PDCCH set or not.

In Fig. 11, in the bitmaps for the enhanced PDCCH sets #1 to #3, bits corresponding to PRB pairs that constitute the enhanced PDCCH sets #1 to #3 are assigned with "1" (allocated). That is, in the bitmap for the enhanced PDCCH #1, bits corresponding to the PRB pairs #0, #9 and #45 are assigned with "1" (allocated). The same goes for the bitmap for the enhanced PDCCH set #2 and the bitmap for the enhanced PDCCH set #3.

Further, in Fig. 11, when the enhanced PDCCH sets #1 and #2 are configured for the user terminal UE #1, it is indicated whether any PRB pair that constitutes the other enhanced PDCCH set #3 is included in the same RBG as the PRB pairs that constitute the enhanced PDCCH sets #1 and #2.

For example, in Fig. 11, the PRB pair #4 that constitutes the enhanced PDCCH set #3 is included in the same RBG #1 as the PRB pair #3 that constitutes the enhanced PDCCH set #2. And, the PRB pair #47 that constitutes the enhanced PDCCH set #3 is included in the same RBG #15 as the PRB pair #45 that constitutes the enhanced PDCCH set #1 and the PRB pair #46 that constitutes the enhanced PDCCH set #2.

In this case, bits corresponding to the PRB pairs #4 and #47 are assigned with "1" (allocated) in both of the bitmaps for the enhanced PDCCH sets #1 and #2. In this way, as the corresponding bits in the bitmap for the enhanced PDCCH set #1 and the bitmap for the enhanced PDCCH set #2 are both assigned with "1" (allocated), it is possible to notify the user terminal UE#1 that the PRB pair corresponding these bits are allocated with another enhanced PDCCH set #3 (in other words, the PRB pair is not allocated with PDSCH). Further, in the radio base station, even when the PRB pais corresponding to the bits is not allocated with the other enhanced PDCCH set #3, the user terminal is notified that the PRB pair is not allocated with PDSCH as described above. With this notification, it is possible to prevent interference to the enhanced PDCCH allocated to the PRB pair corresponding to the bits in another radio base station, thereby allowing application of inter-cell interference coordination.

Likewise, in Fig. 11, when the user terminal UE #10 is configured with the enhanced PDCCH sets #1 and #3, it is indicated whether any PRB pair that constitutes the other enhanced PDCCH set #2 is included in the same RBG as the PRB pairs that constitute the enhanced PDCCH sets #1 and #3.

Thus, in Fig. 11, the PRB pair #3 that constitutes the enhanced PDCCH set #2 is included in the same RBG #1 as the PRB pair #4 that constitutes the enhanced PDCCH set #3. Further, the PRB pair #10 that constitutes the enhanced PDCCH set #2 is included in the same RBG #3 as the PRB pair #9 that constitutes the enhanced PDCCH set #1. Furthermore, the PRB pair #46 that constitutes the enhanced PDCCH set #2 is included in the same RBG #15 as the PRB pair #47 that constitutes the enhanced PDCCH set #3 and the PRB pair #45 that constitutes the enhanced PDCCH set #1.

In this case, in both of the bitmap for the enhanced PDCCH set #1 and the bitmap for the enhanced PDCCH set #3 sent to the user terminal UE #10, bits corresponding to the PRB pairs #3, #10 and #46 are assigned with "1" (allocated). Thus, as the corresponding bits in the bitmap for the enhanced PDCCH set #1 and the bitmap for the enhanced PDCCH set #3 are both assigned with "1" (allocated), the user terminal UE #10 can be notified that the PRB pairs corresponding to these bits are allocated with the other enhanced PDCCH set #2 (that is, the PDSCH is not allocated to these PRB pairs) . In this radio base station, even when the PRB pairs corresponding to these bits are not allocated with the other enhanced PDCCH set #2, the user terminal UE is notified of no allocation of PDSCH to the PRB pairs as mentionedabove. With this notification, it is possible to prevent interference to the enhanced PDCCH allocated to the PRB pairs corresponding to these bits in another radio base station, thereby allowing application of the inter-cell interference coordination.

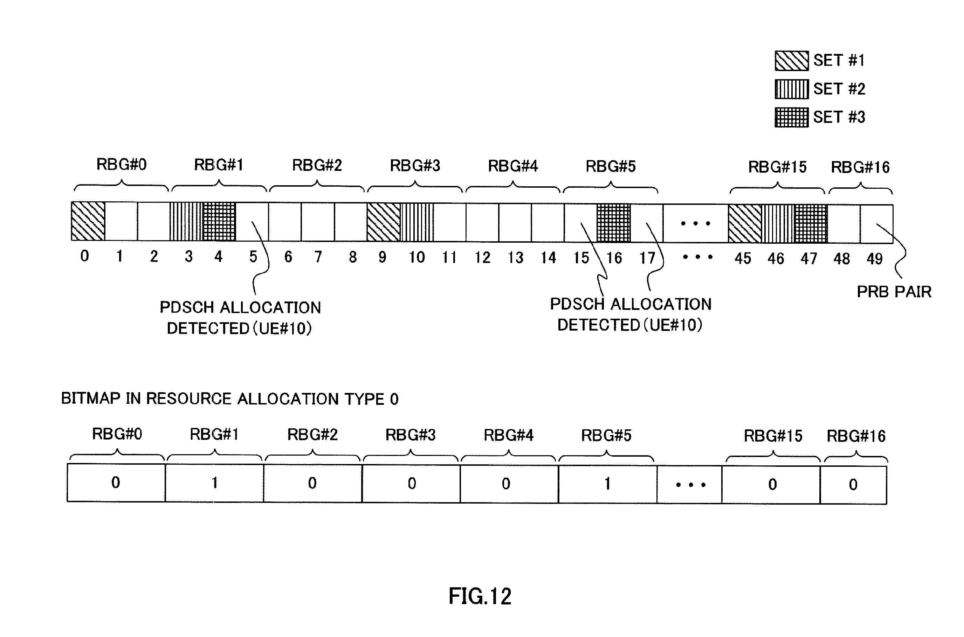

With reference to Fig. 12, explanation is made about an example of PDSCH detection based on the enhanced PDCCH allocation information described above. Fig. 12 is a diagram illustrating an example of the PDSCH detection according to the present embodiment. In Fig. 12, it is assumed that the user terminal UE #10 receives the bitmaps for the enhanced PDCCH sets #1 and #3 shown in Fig. 11 as enhanced PDCCH allocation information. Further, it is also assumed that the user terminal UE #10 receives the bitmap of resource allocation type 0 shown in Fig. 12 as PDSCH allocation information included in DCI.

In Fig. 12, the user terminal UE #10 detects the PDSCH allocation to the RBGs #1 and #5 based on the PDSCH allocation information included in the DCI. Here, the user terminal UE #10 detects, in the RBGs #1 and #5, the PRB pairs allocated to the PDSCH based on the bitmaps for the enhanced PDCCH sets #1 and #3 (see Fig. 11).

Specifically, as the bit corresponding to the PRB pair #4 in the RBG #1 is assigned with "1" (allocated) in the bitmap for the enhanced PDCCH set #3, the user terminal UE #10 detects allocation of the enhanced PDCCH set #3 to the PRB pair #4. In addition, as the bit corresponding to the PRB pair #3 in the RBG #1 is assigned with "1" (allocated) in both of the bitmap for the enhanced PDCCH set #1 and the bitmap for the enhanced PDCCH set #3, the user terminal UE #10 detects non-allocation of the PDSCH to the PRB pair #3. With this detection, the user terminal UE #10 detects allocation of the PDSCH to the other one PRB pair #5 in the RBG #1.

Likewise, as the bit corresponding to the PRB pair #16 in the RBG #5 is assigned with "1" (allocated) in the bitmap for the enhanced PDCCH set #3, the user terminal UE #10 detects allocation of the enhanced PDCCH set #3 to the PRB pair #16. That is, the user terminal UE #10 detects allocation of the PDSCH to the other two PRB pairs #15 and #17 in the RBG #5.

In this way, the bitmaps for the enhanced PDCCH sets #1 and #3 sent to the user terminal UE #10 show not only the PRB pairs that constitute the enhanced PDCCH sets #1 and #3, but also PRB pairs that constitutes the other enhanced PDCCH set #2. Therefore, the user terminal UE #10 is able to detect the PRB pairs allocated with PDSCH appropriately in the RBGs where PDSCH allocation is detected. With this structure, the radio base station is able to allocate PDSCH to some available PRB pairs in the RBGs, thereby improving the resource utilization efficiency.

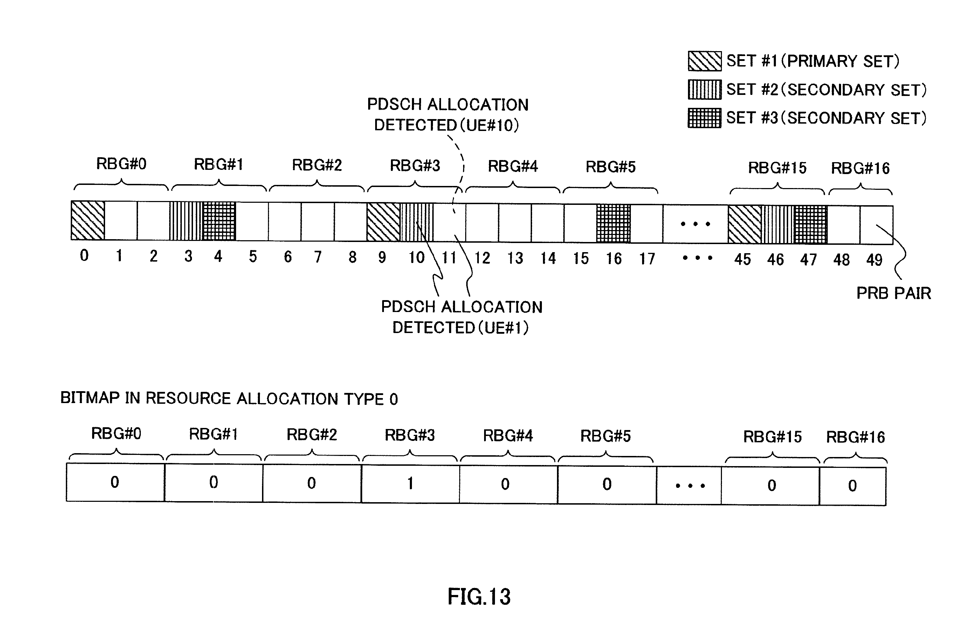

Fig. 13 is a diagram illustrating another example of PDSCH detection according to the present embodiment. In Fig. 13, the user terminal UE #1 receives the bitmaps for the enhanced PDCCH sets #1 and #2 (see Fig. 11) as the enhanced PDCCH allocation information and the user terminal UE #10 receives the bitmaps for the enhanced PDCCH sets #1 and #3 (see Fig. 11) as the enhanced PDCCH allocation information. And, the enhanced PDCCH set #1 is a primary set that is common between the user terminals UE and the enhanced PDCCH sets #2 and #3 are secondary sets each specific to a user terminal UE.

In Fig. 13, the user terminal UE #1 detects PDSCH allocation to the RBG #3 based on the PDSCH allocation information included in the DCI. The user terminal UE #1 detects allocation of the enhanced PDCCH sets #1 and #2 to the PRB pairs #9 and #10, respectively, in the RBG #3 based on the bitmaps for the enhanced PDCCH sets #1 and #2 (see Fig. 11). In this case, the user terminal UE #1 may detect not only allocation of PDSCH to the other PRB pair #11 in the RBG #3 but also allocation of PDSCH to the PRB pair #9 to be allocated with the enhance PDCCH set #2. This is because the enhanced PDCCH set #2 is a secondary set for the user terminal UE #1 itself and is assumed to be unused.

On the other hand, in Fig. 13, the user terminal UE #10 detects allocation to the RBG #3 based on the PDSCH allocation information included in the DCI. The user terminal UE #10 detects allocation of the enhanced PDCCH sets #1 and #2 to the PRB pairs #9 and #10, respectively, in the RBG #3 based on the bitmaps for the enhanced PDCCH sets #1 and #3 (see Fig. 11). In this case, the user terminal UE #10 may detect PDSCH allocation to other PRB pair #11 in the RBG #3. The enhanced PDCCH set #2 is not a secondary set for the user terminal #10 itself and cannot be assumed to be unused.

As described above, when a PRB pair for a secondary set of the user terminal UE itself is included in the RBG where PDSCH allocation is detected, the user terminal UE may detect PDSCH allocation to the PRB pair. Otherwise, when the PRB pair of the secondary set of another user terminal UE is included in the RBG, the user terminal UE may not detect PDSCH allocation to the PRB pair.

When a plurality of enhanced PDCCH sets are configured for each user terminal UE, all the enhanced PDCCH sets are not always used. Therefore, in the case shown in Fig. 13, the user terminal UE is able to detect PDSCH allocation to PRB pairs of an unused secondary set appropriately. Therefore, the radio base station is able to allocate the PDSCH to the PRB pairs of the unused secondary set, thereby making it possible to improve the resource utilization efficiency.

Figs. 11 to 13 illustrate, by way of example, the enhanced PDCCH allocation information configured in bitmap, however, this is not intended to limit the present invention. For example, the enhanced PDCCH allocation information may be index numbers of resource blocks that constitute each enhanced PDCCH set. Specifically, in Fig. 11, when the enhanced PDCCH sets #1 and #2 are configured for the user terminal UE #1, the radio base station may notify the user terminal UE #1 of the index numbers "0", "9" and "45" of the PRB pairs that constitute the enhanced PDCCH set #1, the index numbers "3", "10" and "46" of the PRB pairs that constitute the enhanced PDCCH set #2 and also the index numbers "4", "16" and "47" of the PRB pairs that constitute the enhanced PDCCH set #3 that is configured for the other user terminal UE #10. With this structure, the user terminal UE #1 is able to detect non-allocation of PDSCH to the PRB pairs #4 and #47 that constitute the enhanced PDCCH set #3, in the same RBGs #1 and #15 as the PRB pairs #3, #45 and #46 that constitute the enhanced PDCCH sets #1 and #2.

Next description is made in detail about a radio communication system according to the present embodiment.

### (Radio Communication System Configuration)

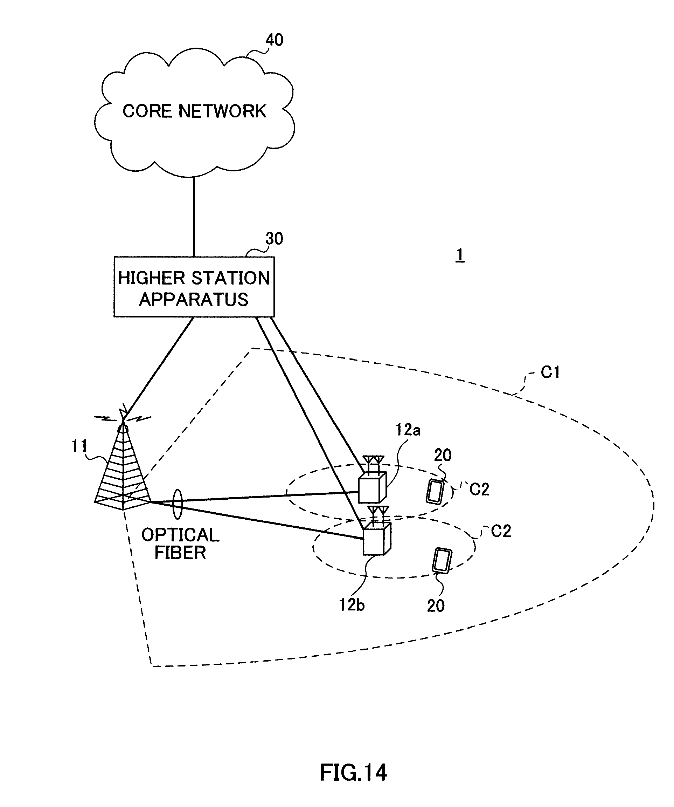

Fig. 14 is a diagram schematically illustrating the configuration of a radio communication system according to the present embodiment. The radio communication system illustrated in Fig. 14 is the LTE system or a system including SUPER 3G. In this radio communication system, carrier aggregation is adopted such that a plurality of basic frequency blocks (component carriers) are aggregated, each of the basic frequency blocks being a unit of a system band of the LTE system. In addition, this radio communication system may be called IMT-Advanced, 4G or FRA (Future Radio Access).

As illustrated in Fig. 14, the radio communication system 1 includes a radio base station 11 that forms a macro cell C1 and radio base stations 12a and 12b that are arranged within the macro cell C1 and each form a smaller cell C2 than the macro cell C1. User terminals 20 are arranged in the macro cell C1 and the small cells C2. Each user terminal 20 is configured to be able to perform radio communication with both of the radio base station 11 and the radio base stations 12.

Between the user terminal 20 and the radio base station 11, communication is performed using carrier of a relatively low frequency band (for example, 2GHz) and wide bandwidth (which may be called existing carrier, Legacy carrier or the like). On the other hand, between the user terminal 20 and the radio base stations 12, communication is performed using carrier of a relatively high frequency band (for example, 3.5 GHz) and narrow bandwidth or using the same carrier as communication with the radio base station 11. The radio base station 11 and each radio base station 12 are connected wiredly or wirelessly to each other.

Each of the radio base station 11 and the radio base stations 12 is connected to a higher station apparatus 30 and then to a core network 40 via the higher station apparatus 30. For example, the higher station apparatus 30 include, but is not limited to, an access gateway apparatus, a radio network controller (RNC), a mobility management entity (MME). Each radio base station 12 may be connected to the higher station apparatus via the radio base station 11.

Here, the radio base station 11 is a radio base station having a relatively wide coverage and may be called eNodeB, a radio base station apparatus, a transmission point or the like. The radio base station 12 is a radio base station having a local coverage and may be called a pico base station, a femto base station, Home eNodeB, RRH (Remote Radio Head), a micro base station, a transmission point, or the like. In the following description, the radio base stations 11 and 12 are called radio base stations 10, unless they are distinguished from each other. Each user terminal 20 is a terminal supporting various communication schemes of LTE, LTE-A and the like, and may include not only a mobile communication terminal, but also a fixed communication terminal.

In the radio communication system, as radio access schemes, OFDMA (Orthogonal Frequency Division Multiple Access) is applied to the downlink, and SC-FDMA (Single-Carrier Frequency-Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single carrier transmission scheme to perform communications by dividing, per terminal, the system band into bands formed with one or continuous resource blocks, and allowing a plurality of terminals to use mutually different bands thereby to reduce interference between terminals.

Here, description is made about communication channels used in the radio communication system illustrated in Fig. 14. The downlink communication channel includes a PDSCH (Physical Downlink Shared CHannel) used by each user terminal 20 on a shared basis, and downlink L1/L2 control channels (PDCCH, PCFICH, PHICH). PDSCH is used to transmit higher control information and user data. PDCCH (Physical Downlink Control Channel) is used to transmit scheduling information of PUSCH and PDSCH and the like. PCFICH (Physical Control Format Indicator Channel) is used to transmit OFDM symbol number used in PDCCH. PHICH (Physical Hybrid-ARQ Indicator Channel) is used to transmit ACK/NACK of HARQ of PUSCH. And, the enhanced PDCCH (also called Enhanced Physical Downlink Control Channel, ePDCCH, E-PDCCH, FDM-based PDCCH) may be used to transmit PDSCH and PUSCH scheduling information and the like. This enhanced PDCCH (enhanced downlink control channel) is frequency-division-multiplexed with PDSCH (downlink shared data channel) to compensate for insufficient capacity of the PDCCH.

The uplink communication channels include a PUSCH (Physical Uplink Shared Channel), which is an uplink data channel used by each user terminal 20 on a shared basis, and a PUCCH (Physical Uplink Control Channel), which is an uplink control channel. This PUSCH is used to transmit user data and higher control information. The PUCCH is used to transmit downlink radio quality information (CQI: Channel Quality Indicator), ACK/NACK, and so on.

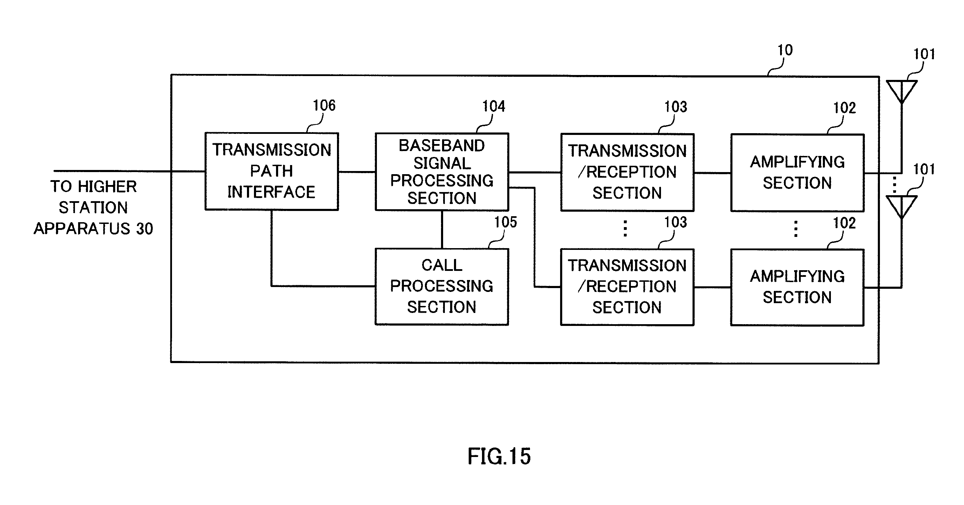

Fig. 15 is a diagram of an overall configuration of the radio base station 10 (including the radio base stations 11 and 12) according to the present embodiment. The radio base station 10 has a plurality of transmission/reception antennas 101 for MIMO transmission, amplifying sections 102, transmission/reception sections 103, a baseband signal processing section 104, a call processing section 105 and a transmission path interface 106.

User data that is transmitted on the downlink from the radio base station 10 to the user terminal 20 is input from the higher station apparatus 30, through the transmission path interface 106, into the baseband signal processing section 104.

In the baseband signal processing section 104, signals are subjected to PDCP layer processing, RLC (Radio Link Control) layer transmission processing such as division and coupling of user data and RLC retransmission control transmission processing, MAC (Medium Access Control) retransmission control, including, for example, HARQ transmission processing, scheduling, transport format selection, channel coding, inverse fast Fourier transform (IFFT) processing, and precoding processing. Then, the resultant signals are transferred to each transmission/reception section 203. As for signals of the downlink control channel, transmission processing is performed, including channel coding and inverse fast Fourier transform, and the resultant signals are transmitted to each transmission/reception section 103.

Also, the baseband signal processing section 104 notifies each user terminal 20 of control information for communication in the cell by a broadcast channel. Information for communication in the cell includes, for example, uplink or downlink system bandwidth and so on.

In each transmission/reception section 103, baseband signals which are precoded per antenna and output from the baseband signal processing section 104 are subjected to frequency conversion processing into a radio frequency band. The amplifying section 102 amplifies the radio frequency signals having been subjected to frequency conversion, and the resultant signals are transmitted from the transmission/reception antenna 101.

Meanwhile, as for data to be transmitted on the uplink from the user terminal 20 to the radio base station 10, radio frequency signals are received in each transmission/reception antenna 101, amplified in the amplifying section 102, subjected to frequency conversion and converted into baseband signals in the transmission/reception section 103, and are input to the baseband signal processing section 104.

The baseband signal processing section 104 performs FFT processing, IDFT processing, error correction decoding, MAC retransmission control reception processing, and RLC layer and PDCP layer reception processing on the user data included in the received baseband signals. Then, the resultant signals are transferred to the higher station apparatus 30 through the transmission path interface 106. The call processing section 105 performs call processing such as setting up and releasing a communication channel, manages the state of the radio base station 10 and manages the radio resources.

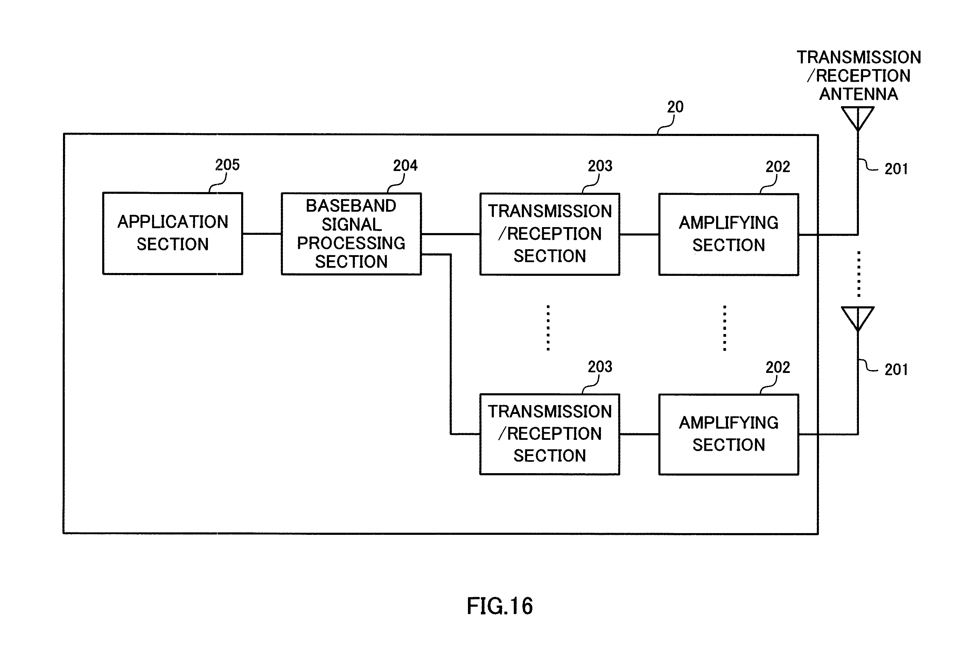

Fig. 16 is a diagram of an overall configuration of the user terminal 20 according to the present embodiment. The user terminal 20 has a plurality of transmission/reception antennas 201 for MIMO transmission, amplifying sections 202, transmission/reception sections (reception section) 203, a baseband signal processing section 204 and an application section 205.

As for downlink data, radio frequency signals received in the transmission/reception antennas 201 are amplified in the respective amplifying sections 202, and subjected to frequency conversion into baseband signals in the transmission/reception sections 203. These baseband signals are subjected to reception processing such as FFT processing, error correction decoding and retransmission control and so on, in the baseband signal processing section 204. In this downlink data, downlink user data is transferred to the application section 205. The application section 205 performs processing related to higher layers above the physical layer and the MAC layer. In the downlink data, broadcast information is also transferred to the application section 205.

On the other hand, uplink user data is input from the application section 205 to the baseband signal processing section 204. In the baseband signal processing section 204, retransmission control (H-ARQ: Hybrid ARQ) transmission processing, channel coding, precoding, DFT processing, IFFT processing and so on are performed, and the resultant signals are transferred to each transmission/reception section 203. In the transmission/reception section 203, the baseband signals output from the baseband signal processing section 204 are converted into a radio frequency band. After that, the frequency-converted radio frequency signals are amplified in the amplifying section 202, and then, transmitted from the transmission/reception antenna 201.

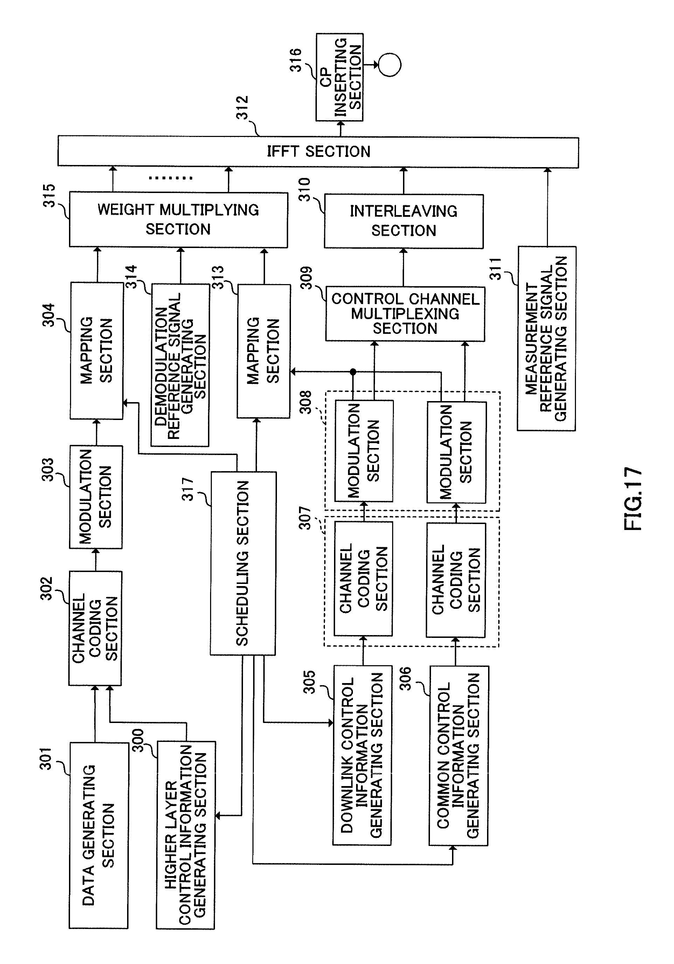

Fig. 17 is a diagram illustrating a functional structure of the baseband signal processing section 104 of the radio base station 10 according to the present embodiment and a part of the higher layer. The functional structure in Fig. 17 is mainly for downlink (transmission), however the radio base station 10 may also have a functional structure for uplink (reception).

As illustrated in Fig. 17, the radio base station 10 has a higher layer control information generating section 300, a data generating section 301, a channel coding section 302, a modulating section 303, a mapping section 304, a downlink control information generating section 305, a common control information generating section 306, a channel coding section 307, a modulating section 308, a control channel multiplexing section 309, an interleaving section 310, a measurement reference signal generating section 311, an IFFT section 312, a mapping section 313, a demodulation reference signal generating section 314, a weight multiplying section 305, a CP inserting section 316, a scheduling section 317. Here, if the radio base station 10 is the radio base station 12 that forms a small cell C2, the control channel multiplexing section 309 and the interleaving section 310 may be omitted.

The higher layer control information generating section 300 generates higher layer control information for each user terminal 20. The higher layer control information is control information signaled by higher layer (for example, RRC signaling), and includes, for example, enhanced PDCCH allocation information and the like. The data generating section 301 generates downlink user data for each user terminal 20.

Downlink user data generated in the data generating section 301 and higher layer control information generated in the higher layer control information generating section 300 are input to the channel coding section 302 as downlink data to be transmitted via PDSCH. The channel coding section 302 performs channel coding on downlink data for each user terminal 20 in accordance with a coding rate that is determined based on feedback information from the user terminal 20. The modulating section 303 modulates the channel-coded downlink data in accordance with a modulation scheme that is determined based on the feedback information from the user terminal 20. The mapping section 304 maps the modulated downlink data in accordance with instructions from the scheduling section 317.

The downlink control information generating section 305 generates UE-specific downlink control information (DCI) for each user terminal 20. The UE-specific downlink control information includes PDSCH assignment information (DL grant), PUSCH assignment information (UL grant) and the like. The common control information generating section 306 generates cell-specific common control information.

The downlink control information generated in the downlink control information generating section 305 and the common control information generated in the common control information generating section 306 are input to the channel coding sections 307 as downlink control information to be transmitted via PDCCH or enhanced PDCCH. The channel coding section 307 performs channel coding on the input downlink control information in accordance with the coding rate instructed from the scheduling section 317. The modulating section 308 modulates the channel-coded downlink control information in accordance with the modulation scheme instructed from the scheduling section 317.

Note that the downlink control information to be transmitted via PDCCH is input from the modulating sections 308 to the control channel multiplexing section 309 and is then multiplexed. The downlink control information multiplexed in the control channel multiplexing section 309 is interleaved in the interleaving section 310. The interleaved downlink control information is input, together with measurement reference signals (CSI-RS: Channel State Information-Reference Signal, CRS: Cell specific Reference Signal etc.) generated in the measurement reference signal generating section 311, to the IFFT section 312.

On the other hand, the downlink control information to be transmitted via the enhanced PDCCH is input from the modulating sections 308 to the mapping section 313. The mapping section 313 maps the downlink control information in predetermined allocation unit (for example, in eCCE unit or in eREG unit) in accordance with instructions from the scheduling section 317 (described later). The mapping section 313 may map downlink control information by distributed mapping or localized mapping in accordance with the instructions from the scheduling section 317.

The mapped downlink control information is input to the weight multiplying section 315, together with downlink data to be transmitted via the PDSCH (that is, downlink data mapped in the mapping section 304) and the demodulation reference signals (DM-RS) generated in the demodulation reference signal generating section 314. The weight multiplying section 315 multiplies the downlink data to be transmitted via the PDSCH, downlink control information to be transmitted via the enhanced PDCCH and the demodulation reference signals by precoding weights specific to the user terminal 20 and performs precoding thereon. The precoded transmission data is input to the IFFT section 312, subjected to inverse fast Fourier transform and converted from frequency domain signals to time-series signals. The signals output from the IFFT section 312 are then applied with cyclic prefix (CP) that serves as a guard interval in the CP inserting section 316 and are output to the transmission/reception sections 103.

The scheduling section 317 performs scheduling of downlink user data to be transmitted on the PDSCH, downlink control information to be transmitted on the enhanced PDCCH and downlink control information to be transmitted on the PDCCH. Specifically, the scheduling section 317 allocates radio resources based on the feedback information from each user terminal 20 (for example, CSI (Channel State Information) including RI (Rank Indicator), CQI (Channel Quality Indicator) and the like) and instruction information from the higher station apparatus 30.

In the present embodiment, the scheduling section 317 configures a plurality of enhanced PDCCH sets (resource sets) for each user terminal 20. Besides, the scheduling section 317 determines PRB pairs that make up each of the enhanced PDCCH sets. The scheduling section 317 determines an enhanced PDCCH set to use, based on the number of user terminals 20 and the like. The scheduling section 317 instructs the mapping section 313 to map downlink control information to the PRB pairs that make up the determined enhanced PDCCH set by distributed mapping or localized mapping. The scheduling section 317 constitutes a configuring section of the present invention.

Further, in the present embodiment, the scheduling section 317 schedules downlink user data to PRB pairs available for PDSCH (that is, PRB pairs that do not constitute each enhanced PDCCH set and PRB pairs that constitute an unused enhanced PDCCH set). The scheduling section 317 instructs the mapping section 304 to map downlink user data to the PRB pairs in accordance with a scheduling result. The scheduling section 317 also instructs the downlink control information generating section 305 to generate PDSCH allocation information in accordance with a resource allocation type. Here, when the resource allocation type is 0, the PDSCH allocation information indicates allocation of PDSCH in RBG unit.

Furthermore, in the present embodiment, the higher layer control information generating section 300 generates enhanced PDCCH allocation information in accordance with instructions from the scheduling section 317. Here, the enhanced PDCCH allocation information indicates PRB pairs that make up each enhanced PDCCH set configured for the user terminal 20 and PRB pairs that constitute in the same RBG as the former PRB pairs, an enhanced PDCCH set configured for another user terminal 20. As illustrated in Fig. 11, the enhanced PDCCH allocation information may be configured of bitmaps corresponding to the respective enhanced PDCCH sets configured for each user terminal UE. The user terminal 20 is notified of such enhanced PDCCH allocation information by higher layer signaling (for example, RRC signaling). The higher layer control information generating section 300 and the transmission/reception sections 103 constitute a notifying section of the present invention.

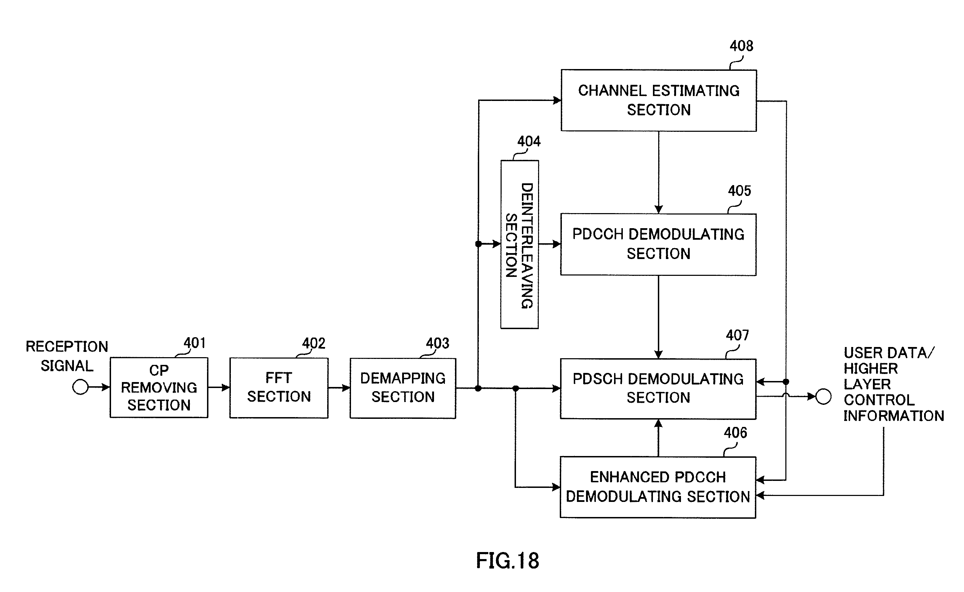

Fig. 18 is a diagram illustrating a functional structure of the baseband signal processing section 204 of the user terminal 20. The user terminal 20 has, as the functional structure for downlink reception, a CP removing section 401, an FFT section 402, a demapping section 403, a deinterleaving section 404, a PDCCH demodulating section 405, an enhanced PDCCH demodulating section 406, a PDSCH demodulating section 407 and a channel estimating section 408.

Downlink signals received as reception data from the radio base station 10 are input to the CP removing section 401, where the cyclic prefix (CP) is removed. The CP-removed downlink signals are input to the FFT section 402. The FFT section 402 performs fast Fourier transform (FFT) on the downlink signals and converts them from the time domain signals to the frequency domain signals, and the resultant signals are then input to the demapping section 403. The demapping section 403 demaps the downlink signals. The demapping processing by the demapping section 403 is performed based on the higher layer control information input from the application section 205. The downlink control information output from the demapping section 403 is deinterleaved in the deinterleaving section 404.

The PDCCH demodulating section 405 performs blind decoding, demodulating, channel decoding and the like on the downlink control information (DCI) output from the deinterleaving section 404, based on a channel estimation result by the channel estimating section 408 (described later). Specifically, the PDCCH demodulating section 405 performs blind decoding on search space candidates reported in advance from the radio base station 10 or predetermined search space candidates to acquire downlink control information. The PDCCH demodulating section 405 outputs PDSCH allocation information included in the downlink control information to the PDSCH demodulating section 407.

The enhanced PDCCH demodulating section 406 performs blind decoding, demodulating, channel decoding and the like on the enhanced PDCCH output from the demapping section 403, based on the channel estimation result by the channel estimating section 408 (described later).

In this embodiment, the enhanced PDCCH demodulating section 406 detects PRB pairs that make up each enhanced PDCCH set based on the enhanced PDCCH allocation information input from the PDSCH demodulating section 407. The enhanced PDCCH demodulating section 406 performs blind decoding on the detected PRB pairs to obtain downlink control information. The PDCCH demodulating section 405 outputs the PDSCH allocation information included in the downlink control information to the PDSCH demodulating section 407.

The PDSCH demodulating section 407 performs demodulation, channel decoding and the like of downlink data output from the demapping section 403, based on the channel estimation result by the channel estimating section 408 (described later). Specifically, the PDSCH demodulating section 407 demodulates PDSCH assigned to the user terminal based on the downlink control information demodulated in the PDCCH demodulating section 405 or the enhanced PDCCH demodulating section 406 to acquire downlink data directed to the user terminal (downlink user data and higher layer control information).

In the present embodiment, the PDSCH demodulating section 407 detects PRB pairs to allocate with PDSCH based on the demodulated enhanced PDCCH allocation information. Specifically, the PDSCH demodulating section 407 obtains PDSCH allocation information from the PDCCH demodulating section 405 or the enhanced PDCCH demodulating section 406. When the resource allocation type is 0, the PDSCH allocation information indicates an RBG to allocate with the PDSCH. The PDSCH demodulating section 407 detects, in this RBG, the PDSCH allocation to PRB pairs other than the PRB pairs indicated by the enhanced PDCCH allocation information. The PDSCH demodulating section 407 constitutes a detecting section of the present invention.

Further, in the present embodiment, when a PRB pair that makes up a secondary set for the user terminal 20 itself is included in this RBG, the PDSCH demodulating section 407 may detect PDSCH allocation to this PRB pair. On the other hand, when a PRB pair that makes up a secondary set for another user terminal 20 is included in this RBG, the PDSCH demodulating section 407 may not detect PDSCH allocation to this PRB pair.

The channel estimating section 408 performs channel estimation (channel measurement) using demodulation reference signals (DM-RS), measurement reference signals (CRS, CSI-RS) and the like. The channel estimating section 408 outputs a channel estimation result based on the measurement reference signal (CRS, CSI-RS) to the PDCCH demodulating section 405. On the other hand, the channel estimating section 408 outputs the channel estimation result based on the demodulation reference signal (DM-RS) to the PDSCH demodulating section 407 and the enhanced PDCCH demodulating section 406. Due to demodulation using the demodulation reference signal (DM-RS) specific to the user terminal 20, it is possible to enjoy beamforming gains for the PDSCH and enhanced PDCCH.

Thus, according to the radio communication system 1 of the present embodiment, when a plurality of enhanced PDCCH sets is configured for the user terminal 20, the user terminal 20 is notified of enhanced PDCCH allocation information indicating not only PRB pairs that make up the enhanced PDCCH sets, but also a PRB pair that constitutes, in the same RBG as the former PRB pairs, another enhanced PDCCH set configured for another user terminal 20. Therefore, the user terminal 20 is able to appropriately detect PRB pairs allocated with PDSCH based on the enhanced PDCCH allocation information. Consequently, the radio base station 10 is able to allocate PDSCH flexibly to available PRB pairs, thereby improving resource utilization efficiency.

Up to this point, the present invention has been described in detail by way of the above-described embodiments. However, a person of ordinary skill in the art would understand that the present invention is not limited to the embodiments described in this description. The present invention could be embodied in various modified or altered forms without departing from the gist or scope of the present invention defined by the claims. Therefore, the statement in this description has been made for the illustrative purpose only and not to impose any restriction to the present invention.

The disclosure of Japanese Patent Application No. 2012-171407 filed on August 1, 2012, including the specification, drawings, and abstract, is incorporated herein by reference in its entirety.

## Claims

1. A radio communication method in a radio communication system in which a radio base station transmits downlink control information using an enhanced downlink control channel frequency-division-multiplexed with a downlink shared data channel, the radio communication method comprising the steps of:
configuring, by the radio base station, a plurality of resource sets for a user terminal, each of the resource sets including a plurality of resource blocks allocated to the enhanced downlink control channel;
notifying, by the radio base station, the user terminal of enhanced downlink control channel allocation information indicating the resource blocks that constitute each of the resource sets; and
detecting, by the user terminal, resource blocks allocated to the downlink shared data channel for the user terminal, based on the enhanced downlink control channel allocation information,
wherein the enhanced downlink control channel allocation information indicates a resource block that constitutes an other resource set in a same resource block group as any of the resource blocks that constitute each of the resource sets.

2. The radio communication method according to claim, 1, further comprising the step of receiving downlink shared data channel allocation information indicating resource block groups to be allocated to the downlink shared data channel, using the enhanced downlink control channel or a downlink control channel,
wherein in the step of detecting the resource blocks, the user terminal detects, as resource blocks to be allocated to the downlink shared data channel, resource blocks that are in the resource block groups indicated by the downlink shared data channel allocation information and are other than the resource blocks indicated by the enhanced downlink control channel allocation information.

3. The radio communication method according to claim 2, wherein
the resource sets comprises a first resource set configured for the user terminal on a shared basis and a second resource set configured to be specific to the user terminal, and
in the step of detecting the resource blocks, the user terminal detects, as the resource blocks to be allocated to the downlink shared data channel, a resource block that constitutes the second resource set in the resource block groups indicated by the downlink shared data channel allocation information.

4. The radio communication method according to any one of claims 1 to 3, wherein the enhanced downlink control channel allocation information includes a plurality of bitmaps corresponding respectively to the resource sets, and in the bitmaps, bits corresponding to the resource block that constitutes the other resource set all indicate an allocated state.

5. The radio communication method according to claim 1, wherein the user terminal is notified of the enhanced downlink control channel allocation information by higher layer signaling.

6. A radio base station that transmits downlink control information using an enhanced downlink control channel frequency-division-multiplexed with a downlink shared data channel, the radio base station comprising:
a configuring section for configuring a plurality of resource sets for a user terminal, each of the resource sets including a plurality of resource blocks allocated to the enhanced downlink control channel; and
a notifying section for notifying the user terminal of enhanced downlink control channel allocation information indicating the resource blocks that constitute each of the resource sets,
wherein the enhanced downlink control channel allocation information indicates a resource block that constitutes an other resource set in a same resource block group as any of the resource blocks that constitute each of the resource sets.

7. A user terminal that receives downlink control information using an enhanced downlink control channel frequency-division-multiplexed with a downlink shared data channel, the user terminal comprising:
a receiving section for, when the user terminal is configured with a plurality of resource sets each of which includes a plurality of resource blocks allocated to the enhanced downlink control channel, receiving, from a radio base station, enhanced downlink control channel allocation information indicating the resource blocks that constitute each of the resource sets; and
a detecting section for detecting resource blocks allocated to the downlink shared data channel for the user terminal, based on the enhanced downlink control channel allocation information,
wherein the enhanced downlink control channel allocation information indicates a resource block that constitutes an other resource set in a same resource block group as any of the resource blocks that constitute each of the resource sets.

8. A radio communication system in which a radio base station transmits downlink control information using an enhanced downlink control channel frequency-division-multiplexed with a downlink shared data channel, the radio communication system comprising:
the radio base station having: a configuring section for configuring a plurality of resource sets for a user terminal, each of the resource sets including a plurality of resource blocks allocated to the enhanced downlink control channel; and a notifying section for notifying the user terminal of enhanced downlink control channel allocation information indicating the resource blocks that constitute each of the resource sets; and
the user terminal having a detecting section for detecting resource blocks allocated to the downlink shared data channel for the user terminal, based on the enhanced downlink control channel allocation information,
wherein the enhanced downlink control channel allocation information indicates a resource block that constitutes an other resource set in a same resource block group as any of the resource blocks that constitute each of the resource sets.
